**Europäisches Patentamt**

**European Patent Office**

**Office européen des brevets**

(19)

(11) Veröffentlichungsnummer: **0 248 280**

**A2**

(12) # EUROPÄISCHE PATENTANMELDUNG

(21) Anmeldenummer: **87107386.2**

(22) Anmeldetag: **21.05.87**

(51) Int. Cl.³: **B 29 C 47/88**
**B 29 C 47/90**

(30) Priorität: **03.06.86 DE 3618656**

(43) Veröffentlichungstag der Anmeldung:
**09.12.87 Patentblatt 87/50**

(84) Benannte Vertragsstaaten:
**AT BE DE FR GB IT NL**

(71) Anmelder: **Spitzmüller, Otto**
**Eckener Strasse 12**
**D-7600 Offenburg(DE)**

(72) Erfinder: **Spitzmüller, Otto**
**Eckener Strasse 12**
**D-7600 Offenburg(DE)**

(74) Vertreter: **Schmitt, Hans, Dipl.-Ing. et al,**
**Patentanwälte Dipl.-Ing H. Schmitt Dipl.-Ing. W. Maucher**
**Dreikönigstrasse 13**
**D-7800 Freiburg(DE)**

(54) Vorrichtung zum Kalibrieren eines hohlen Kunststoffprofiles.

(57) Eine Vorrichtung (1) zum Kalibrieren eines aus einer Strangpresse austretenden, zunächst noch plastischen, hohlen Kunststoffprofiles hat wenigstens einen öffenbaren trockenen Kalibrierteil (2, 3) und einen in Vorschubrichtung des Profiles dahinter angeordneten Vakuumtank (4), innerhalb welchem das Profil unter Unterdruck mit Flüssigkeit, vorzugsweise Wasser oder gegebenenfalls auch Gas gekühlt wird. Sowohl am Eintritt als auch am Austritt des Vakuumtanks (4) ist jeweils eine der Profilkontur entsprechende Öffnung (7) für den Durchtritt des Profiles vorgesehen, die gegenüber dem Profil etwas Spiel haben kann oder soll. Zur Abdichtung der Eintrittsöffnung (7) und der Austrittsöffnung für das Profil ist deshalb außen am Vakuumtank (4) jeweils ein Flüssigkeitsbecken (8) vorgesehen, dessen Füllungsniveau über den höchsten Stellen der Eintrittsöffnung (7) bzw. der Austrittsöffnung angeordnet ist, so daß auch komplizierte Profile bearbeitet und dennoch ein Verlust an Unterdruck im Inneren des Vakuumtanks (4) so gering wie möglich gehalten wird.

Fig. 1

PATENTANWÄLTE
DIPL.-ING. H. SCHMITT
DIPL.-ING. W. MAUCHER

78 FREIBURG 1. BR.
DREIKÖNIGSTR. 13
TELEFON: (07 61) 70773
70774
MR/bö

0248280

Herr
Otto Spitzmüller
Eckener Straße 12
7600 Offenburg

UNSERE AKTE · BITTE STETS ANGEBEN!
E 87 295 MR

## Vorrichtung zum Kalibrieren eines

## hohlen Kunststoffprofiles

Die Erfindung betrifft eine Vorrichtung zum Kalibrieren eines aus einer Strangpresse austretenden, zunächst noch plastischen, hohlen Kunststoffprofiles, mit wenigstens einem öffenbaren trockenen Kalibrierteil und einem in Vorschubrichtung des Profiles dahinter angeordneten Vakuumtank od. dgl., innerhalb welchem das Profil unter Unterdruck mit Flüssigkeit, vorzugsweise Wasser, gekühlt wird, wobei sowohl am Eintritt als auch am Austritt des Vakuumtankes jeweils eine der Profilkontur entsprechende Öffnung für den Durchtritt des Profiles vorgesehen ist.

Eine derartige Vorrichtung ist aus der DE-OS 34 27 277 bekannt. Dabei ist zwischen zwei trockenen Kalibrierteilen ein Vakuumtank angeordnet, in welchem das Hohlprofil zusätzlich mit Flüssigkeit gekühlt werden kann, wobei der Unterdruck in diesem Tank dafür sorgen soll, daß das noch plastische Profil seine Außenkontur beibehält. Durch diesen Vakuumtank soll die Abkühlung und Erhärtung beschleunigt und somit die Leistungsfähiigkeit der gesamten Vorrichtung vergrößert werden.

/ 2

Schwierigkeiten bereitet jedoch bei dieser vorveröffentlichten Vorrichtung die Anfahr-Phase, bei welcher der erste Teil eines Profiles zunächst einmal in die gesamte Kalibriervorrichtung eingefädelt werden muß. Dazu können zwar die trockenen Kalibrierteile geöffnet werden, jedoch ergeben sich in dem Verbindungsbereich zu dem Vakuumtank Schwierigkeiten, weil die bei der DE-OS 34 27 277 vorgesehenen Flanschverbindungen dazu in irgendeiner Weise gelöst werden müssen.

Dabei ist zu beachten, daß der einzulegende Profilanfang während des anschließenden Schließens der Kalibrierteile ständig mit der Vorschubgeschwindigkeit weiterläuft. Es ist deshalb bei der vorveröffentlichten Vorrichtung mit einem erheblichen Ausschuß zu Beginn eines jeden Kalibriervorganges insbesondere dann zu rechnen, wenn die zu fertigenden Profile einen komplizierten Querschnitt mit mehreren Hohlräumen, Abwinklungen und dgl. haben.

Eine weitere Schwierigkeit bei der Vorrichtung gemäß der DE-OS 34 27 277 ist darin zu sehen, daß der Vakuumtank nur begrenzt unter Unterdruck gesetzt werden kann, da die Eintritts- und Austrittsöffnungen für das Profil nie ganz dicht sein können. Es muß ein gewisses geringfügiges Spiel in diesen Öffnungen vorgesehen werden, um ein Verklemmen und Festsetzen der hindurchzuziehenden Profile zu vermeiden. An diesen Stellen kann nun ständig Luft in das Innere des Vakuumtankes einströmen, so daß selbst bei leistungsfähigen Unterdruck-Erzeugern nur eine relativ geringe Druckverminderung möglich ist. Somit ist die bestmögliche Formerhaltung des Profiles innerhalb dem Vakuumtank nicht sichergestellt. Dadurch wird wiederum die Leistungsfähigkeit der gesamten Vorrichtung beeinträchtigt und die Gefahr von Ausschuß erhöht.

Es besteht deshalb die Aufgabe, eine Vorrichtung der eingangs erwähnten Art zu schaffen, bei welcher in dem Vakuumtank ein verbesserter Unterdruck möglich ist, gleichzeitig aber auch das Einlegen des Profilanfanges erleichtert und beschleunigt ist, so daß insgesamt die Gefahr von Ausschuß bei höherer Leistung vermindert ist.

Die Lösung dieser Aufgabe besteht im wesentlichen darin, daß zur Abdichtung der Eintrittsöffnung und der Austrittsöffnung für das Profil außen am Vakuumtank jeweils ein Flüssigkeitsbecken vorgesehen ist, dessen Füllungsniveau über den höchsten Stellen der Eintrittsöffnung bzw. der Austrittsöffnung angeordnet ist.

Versuche haben gezeigt, daß durch eine solche Flüssigkeitssperre unmittelbar vor und hinter dem Vakuumtank die an der Eintritts- und Austrittsöffnung erforderlichen geringfügigen Spalte gegenüber dem hindurchlaufenden Profil so sicher abgedichtet werden können, daß eine Vakuumpumpe oder ein Unterdruck-Erzeuger mit wesentlich größerem Wirkungsgrad an dem Vakuumtank eingesetzt werden kann. Entsprechend sicherer wird das Hohlprofil im Inneren dieses Vakuumtankes in seiner Form erhalten und kann gleichzeitig in diesem Bereich mit Flüssigkeit gekühlt werden, so daß die Durchlaufgeschwindigkeit des Profiles durch die Kalibriervorrichtung entsprechend erhöht werden kann.

Gleichzeitig wird das erste Einlegen erleichtert, da der trockene Kalibrierteil nicht unmittelbar und möglichst dicht an den Vakuumtank angeschlossen sein muß, sondern den der Flüssigkeitssperre entsprechenden Abstand hat und seinerseits nur an dieser Flüssigkeitssperre dicht angeschlossen sein muß. Dadurch ergibt sich die Möglichkeit, beim Anfahren zunächst den Beginn

/ 4

des Profiles bei geöffnetem trockenem Kalibrierteil und noch ungefülltem Flüssigkeitsbecken einzulegen und durch den Vakuumtank hindurchzuziehen, bis dieser Profilanfang von einer an sich bekannten Abziehvorrichtung erfaßt ist. Danach kann der trockene Kalibrierteil auf einfache Weise geschlossen und in seine gegenüber der Flüssigkeitssperre dichte Position gebracht, dann das Wasserbecken zur Bildung der Flüssigkeitssperre gefüllt werden, wonach bereits die gesamte Vorrichtung im Normalbetrieb laufen kann. Zuvor oder zwischenzeitlich kann auch der Vakuumtank dicht geschlossen und mit Wasser gefüllt werden. Entsprechend kurz ist diese Anlaufzeit der gesamten Vorrichtung, so daß der zu Beginn notwendige Ausschuß des Profiles ebenfalls nur kurz ist.

Die Füllung der Flüssigkeitsbecken ist zweckmäßigerweise Wasser, so daß bei einem Übertritt von Abdichtflüssigkeit aus dieser Flüssigkeitssperre in den Vakuumtank dort problemlos eine Vermischung mit der in der Regel von Wasser gebildeten Kühlflüssigkeit möglich ist.

Das in Vorschubrichtung erste Flüssigkeitsbecken am Vakuumtank kann an seiner dem trockenen Kalibrierteil zugewandten Wandung einen die Stirnseite dieses Kalibrierteiles aufnehmenden Ausschnitt und eine gegen die Stirnseite mittels einer Dichtung od. dgl. anlegbare Platte aufweisen, die ihrerseits einen Ausschnitt für den Durchtritt des Profiles hat und von dem trockenen Kalibrierteil wegbewegbar ist. Dadurch ist es möglich, bei wegbewegter Platte und offenem trockenem Kalibrierteil den Profilanfang sehr leicht einzufädeln und durch das Flüssigkeitsbecken hindurchzulegen, wonach dann die anlegbare Platte gegen die Stirnseite des trockenen Kalibrierteiles angelegt wird und somit bereits die Verbindung zwischen trockenem Kalibrierteil und Wasserbecken hergestellt ist.

Dieser Abdichtvorgang zwischen dem trockenen Kalibrierteil und der von einem Wasserbecken gebildeten Flüssigkeitssperre kann dadurch beschleunigt und vereinfacht werden, daß die an der Stirnseite des trockenen Kalibrierteiles dicht anlegbare Platte zum Abschließen des Wasserbeckens gegen den trockenen Kalibrierteil hin als schwenkbare, unterhalb der Unterkante des trockenen Kalibrierteiles angelenkte Klappe ausgebildet ist. Somit braucht diese Platte nur zum Inneren des Beckens hin verschwenkt zu werden, um das Öffnen und wieder Schließen des Kalibrierteiles auf einfache Weise zu erlauben, wobei nämlich in bekannter Weise die obere Hälfte des Kalibrierteiles nach oben bewegt oder geklappt wird. Durch die zuvor weggeschwenkte Klappe ist somit im Bereich der dem trockenen Kalibrierteil zugewandten Wandung des Wasserbeckens kein störendes Element mehr vorhanden, so daß das Öffnen und Schließen des trockenen Kalibrierteiles entsprechend schnell und einfach durchzuführen ist.

Im Inneren des Vakuumtanks kann vor allem bei relativ großer Länge dieses Tanks wenigstens eine Haltescheibe vorgesehen sein, die eine mit der Eintrittsöffnung und der Austrittsöffnung genau fluchtende Aussparung entsprechend der Außenkontur des herzustellenden Profiles haben kann. Bei noch größerer Länge des Vakuumtankes können auch mehrere derartige Haltescheiben vorgesehen sein, die dann mit ihren Aussparungen ebenfalls genau miteinander fluchten.

Der Vakuumtank kann einen öffenbaren, gasdicht verschließbaren Deckel vorzugsweise an seiner Oberseite aufweisen. Dadurch ist das Einfädeln des Profilanfanges von oben her möglich, ohne die erforderliche Füllhöhe im Inneren des Vakuumtanks zu beeinträchtigen.

Bei einer Ausführungsform der erfindungsgemäßen Vorrichtung, bei welcher das herzustellende Profil innerhalb des Vakuumtanks durch ein es umschließendes Wasserbad laufen soll, ist es zweckmäßig, wenn in dem Vakuumtank wenigstens ein Wasserablauf vorgesehen ist, der oberhalb der obersten Kante des herzustellenden Profiles und der höchsten Stellen der Eintritts- und Austrittsöffnung angeordnet ist und wenn die Saugöffnung zum Anschluß einer Vakuumpumpe od. dgl. Unterdruck-Erzeuger höher als der Wasserablauf liegt. Ferner ist es dabei zweckmäßig, wenn die Flüssigkeitsbecken und der Vakuumtank je einen Wasserzulauf haben. Innerhalb das Vakuumtankes kann dann ständig frisches Wasser zulaufen und durch das abzukühlende Profil erwärmtes Wasser ablaufen, so daß eine gleichbleibende Temperatur innerhalb des Vakuumtanks aufrechterhalten werden kann. Gleichzeitig kann der Flüssigkeitsverlust in den abdichtenden Flüssigkeitsbecken ausgeglichen werden, der durch ein gewisses Einsaugen von Flüssigkeit in das Innere des Vakuumtankes entstehen kann.

Dabei sei an dieser Stelle bemerkt, daß die Flüssigkeitsbecken je nach ihrer Ausdehnung neben ihrer Hauptaufgabe, den Vakuumtank gasdicht am Eintritt und Austritt des Profiles abzudichten, noch den zusätzlichen Zweck erfüllen, zur Abkühlung des Profiles beizutragen.

Bei einer abgewandelten Ausführungsform kann als Wasserzulauf im Vakuumtank eine Sprühvorrichtung vorgesehen sein, wobei dann ein Wasserablauf vorzugsweise im unteren Bereich der Vakuumkammer unterhalb der untersten Kante des Profiles angeordnet ist.

Eine weitere Verringerung der Gefahr von Ausschuß kann darin bestehen, daß vor dem Vakuumtank zwei trockene

7

Kalibrierteile hintereinandergeschaltet sind und als Übergang zwischen den beiden trockenen Kalibrierteilen ein Flüssigkeitsbecken angeordnet ist. Dieses kann dann die trockenen Kalibrierteile, an denen ebenfalls ein Unterdruck angelegt ist, abdichten, so daß der Wirkungsgrad auch der die trockenen Kalibrierteile bedienenden Vakuumpumpe oder Unterdruck-Erzeuger ebenso verbessert wird, wie der für die Unterdruckerzeugung am Vakuumtank.

Eine weitere Ausgestaltung der Erfindung kann darin bestehen, daß der Wasserzulauf zum Vakuumbehälter am in Vorschubrichtung hinteren Bereich und der Wasserablauf nahe der Eintrittsöffnung für das Profil angeordnet sein kann. Somit wird in dem Bereich, in welchem das Profil schon am stärksten abgekühlt ist, das frische und kältere Wasser eingeführt, welches dann dort und in seinem weiteren Strömungsverlauf zu dem Ablauf hin durch das Profil etwas angewärmt wird, so daß der wärmere Teil des Profiles am Eintritt in den Vakuumtank auch mit etwas wärmerem Wasser beaufschlagt und somit die Abschreckung des Profiles verringert wird. Dadurch können zu schnelle und heftige Erstarrungen mit den daraus resultierenden Gefahren für das Profil vermieden werden.

Eine weitere oder zusätzliche Ausgestaltung der Erfindung kann darin bestehen, daß der Vakuumtank auf seine Länge wenigstens einmal bis über Profilhöhe wasserdicht unterteilt ist und im in Vorschubrichtung ersten Bereich mit wärmerem Wasser als in Vorschubrichtung dahinter beschickt ist, wobei jeder abgeteilte Bereich des Vakuumtanks vorzugsweise einen eigenen Wasserzu- und -ablauf hat. Dies erlaubt es, in dem Bereich, den das Profil innerhalb des Vakuumtanks zuerst durchläuft, mit wärmerem Wasser zu beschicken als den oder die folgenden

/ 8

Bereiche, um so die zweckmäßige abgestufte allmähliche Abkühlung des Profiles zu erreichen. Dadurch kann wiederum die Gefahr von Ausschuß vermindert und die Leistung der gesamten Vorrichtung erhöht werden.

Vor allem bei Kombination der vorbeschriebenen Merkmale und Maßnahmen ergibt sich eine Vorrichtung zum Kalibrieren, bei welcher die Vorteile eines Vakuumtankes zugunsten einer Vielzahl hintereinandergeschalteter trockener Kalibrierteile ausgenutzt werden können, ohne die bisherigen Nachteile beim Einfädeln des Profilanfanges und der relativ schwierigen Abdichtung bzw. ungenügenden Unterdruckerzeugung innerhalb des Vakuumtanks in Kauf zu nehmen. Dies wird in erster Linie durch die außen am Eintritt und am Austritt des Vakuumtanks befindlichen abdichtenden Flüssigkeitsbecken erreicht, die somit die Vergrößerung des Vakuumtankes bei dennoch guter Unterdruckwirkung in seinem Inneren erlauben, so daß sogar mehrere Bereiche unterschiedlicher Wassertemperaturen im Inneren des Vakuumtankes angeordnet werden können und insbesondere dem Vakuumtank nachgeschaltete zusätzliche Trockenkalibrierteile, wie sie gemäß der DE-OS 34 27 277 bisher notwendig waren, vermieden werden können.

Nachstehend ist die Erfindung mit ihren ihr als wesentlich zugehörenden Einzelheiten anhand der Zeichnung noch näher beschrieben. Es zeigt in zum Teil schematisierter Darstellung :

Fig. 1    eine Seitenansicht einer Vorrichtung zum Kalibrieren mit zwei hintereinander angeordneten trockenen Kalibrierteilen und einem sich daran anschließenden Vakuumtank,

Fig. 2 in schaubildlicher Darstellung und in vergrößertem Maßstab den Übergang von einem trockenen Kalibrierteil zu dem Vakuumtank mit einem dazwischen angeordneten Flüssigkeitsbecken zur Erzeugung einer abdichtenden Flüssigkeitssperre am Eintritt in den Vakuumtank, wobei die analoge Ausbildung eines Flüssigkeitstanks am Austritt aus dem Vakuumtank der besseren Übersicht wegen weggelassen ist,

Fig. 3 einen Längsschnitt durch den Anschluß des trockenen Kalibrierteiles an das Flüssigkeitsbecken gemäß der Schnittlinie A-B in Fig. 4 und

Fig. 4 eine Draufsicht des Flüssigkeitsbeckens am Eintritt in den Vakuumtank.

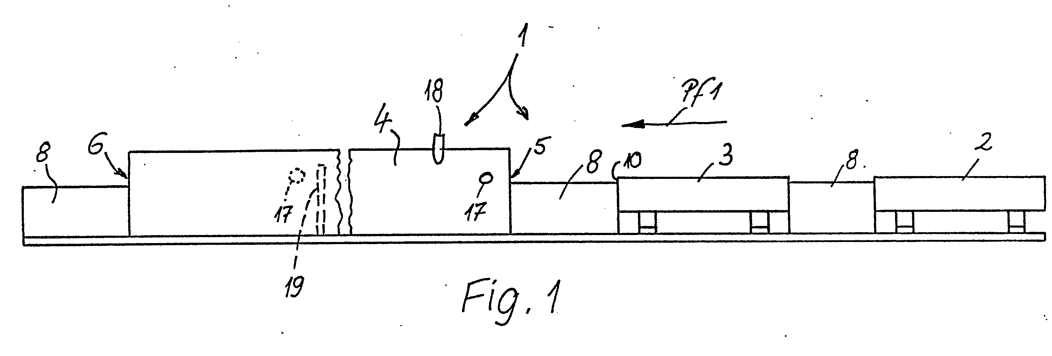

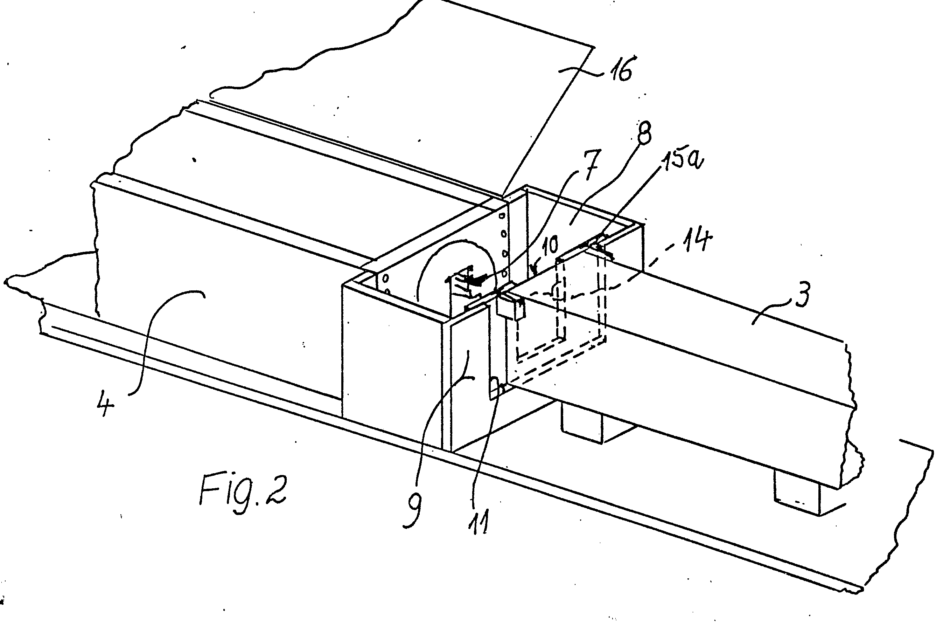

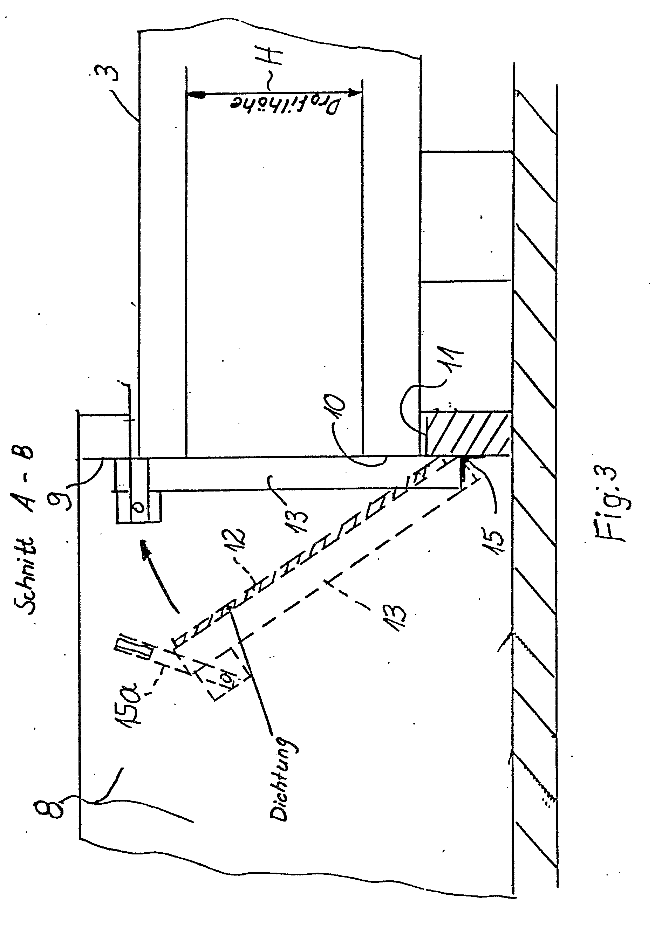

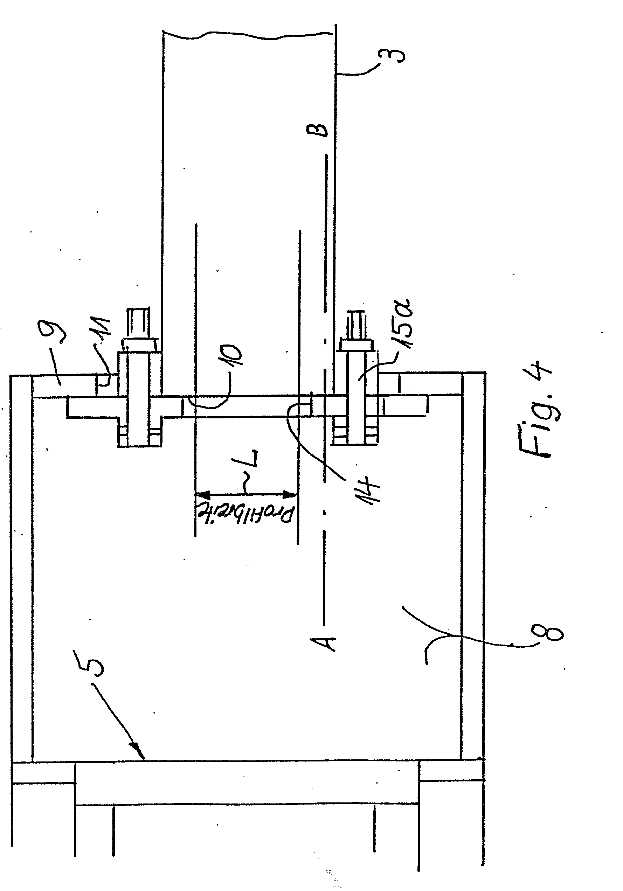

Eine im ganzen mit 1 bezeichnete Vorrichtung zum Kalibrieren eines aus einer nicht näher dargestellten Strangpresse austretenden, zunächst noch plastischen, hohlen Kunststoffprofiles, dessen mögliche Gesamthöhe H lediglich schematisch in Fig. 3 und dessen mögliche Gesamtbreite L schematisch in Fig. 4 angedeutet ist, weist im Ausführungsbeispiel zwei öffenbare trockene Kalibrierteile 2 und 3 und einen in Vorschubrichtung gemäß dem Pfeil Pf 1 in Fig. 1 des Profiles dahinter angeordneten Vakuumtank 4 od. dgl. Vakuumbehälter auf. Innerhalb dieses Vakuumtanks 4 wird das Profil unter Unterdruck mit Flüssigkeit, insbesondere Wasser, oder gegebenenfalls mit Gas gefüllt. Dabei ist sowohl am Eintritt 5 als auch am Austritt 6 des Vakuumtanks 4 jeweils eine der Profilkontur entsprechende Öffnung 7 (vergl. Eintrittsöffnung 7 in Fig. 2) für den Durchtritt des Profiles vorgesehen, wobei diese Eintritts- und Austrittsöffnung 7 in einem jeweils auswechselbaren Teil angeordnet ist, um an wechselnde Konturen der herzustellenden Profile angepaßt werden zu können.

Um mit möglichst wenig Leistung dennoch innerhalb des Vakuumtanks 4 einen ausreichenden Unterdruck herstellen zu können, ist vorgesehen, daß an diesen Eintritts- und Austrittsöffnungen 7, wo zwischen dem durchlaufenden Profil und den Rändern dieser Öffnungen etwas Spiel erforderlich ist, eine Abdichtung angeordnet ist. Um diese Abdichtung so zu gestalten, daß vor allem beim ersten Einführen des Profilanfanges vor allem der davor befindliche trockene Kalibrierteil 3 schnell und ungehindert geöffnet werden kann, damit der Profilanfang einfach eingeführt werden kann, ist zur Abdichtung der Eintrittsöffnung 7 und der Austrittsöffnung für das Profil außen am Vakuumtank 4 jeweils ein Flüssigkeitsbecken 8 vorgesehen, dessen Füllungsniveau über den höchsten Stellen der Eintrittsöffnung 7 bzw. der Austrittsöffnung und somit über der obersten Kante des Profiles angeordnet ist. Die Füllung des Flüssigkeitsbeckens 8 übertrifft also die in Fig. 3 dargestellte obere Begrenzung der größten Höhe H des Profiles. Die Füllung der Flüssigkeitsbecken 8 ist dabei zweckmäßigerweise Wasser, weil dieses ungefährlich und preiswert ist und dennoch eine gute Abdichtung an den Spalten zwischen Profil und Öffnungen 7 ermöglicht. Dabei ist Wasser als Sperrflüssigkeit besonders vorteilhaft, wenn die Kühlung des Profiles innerhalb des Vakuumtanks 4 ebenfalls mit Wasser erfolgt, weil durch den Unterdruck im Vakuumtank 4 geringe Mengen der sperrenden Wasserfüllung aus den Becken 8 in das Innere des Vakuumtanks 4 gelangen. Sie können sich dort problemlos mit dem Kühlwasser mischen.

In den Fig. 2 bis 4 erkennt man, daß das in Vorschubrichtung erste Flüssigkeitsbecken 8 am Vakuumtank 4 an seiner dem trockenen Kalibrierteil 3 zugewandten Wandung 9 einen die Stirnseite 10 dieses Kalibrierteiles 3 aufnehmenden Ausschnitt 11 und eine gegen die Stirnseite 10 mittels einer Dichtung 12 anlegbare Platte 13 aufweist, die ihrerseits eine vorzugsweise nach oben offene Ausnehmung 14 für den Durchtritt des Profiles hat und von dem trockenen Kalibrierteil 3 wegbewegbar ist. Bei wegbewegter Platte 13 kann somit der trockene Kalibrierteil 3 problemlos geöffnet werden, um den Anfang eines zu kalibrierenden Profiles gut und schnell einlegen zu können.

In Fig. 3 erkennt man dabei, daß die an der Stirnseite 10 des trockenen Kalibrierteiles 3 dicht anlegbare Platte 13 zum Abschließen des Wasserbeckens 8 als schwenkbare, unterhalb der Unterkante des trockenen Kalibrierteiles 3 mittels einem Scharnier 15 angelenkte Klappe ausgebildet ist, die am oberen Rand mittels Bolzen 15 a in Schließstellung gegenüber der Beckenwand 9 lösbar verriegelbar ist.

Beim ersten Anfahren der Vorrichtung 1 kann also auf einfache Weise die Platte 13 in das Innere des Wasserbeckens 8 geklappt werden, wodurch das Öffnen des trockenen Kalibrierteiles 3 in keiner Weise mehr behindert wird. Somit können all diese beim Anfahren erforderlichen Maßnahmen schnell und einfach durchgeführt werden, wobei beim weiteren Durchlauf des Profiles dann das Schließen dieser Klappe 13 und des trockenen Kalibrierteiles 3 ebenso einfach und schnell durchführbar sind, so daß der Anfangs-Ausschuß des Proffiles aufgrund der Schnelligkeit dieser zu Beginn notwendigen Tätigkeiten so gering wie möglich gehalten werden kann. Nach dem Füllen des nun dichten Wasserbeckens 8 ist außerdem der Vakuumtank an der Eintritts- und Austrittsöffnung 7 so abgedichtet, daß das Vakuum mit hohem Wirkungsgrad angelegt werden kann. Dabei erkennt man in Fig. 2, daß der Vakuumtank 4 einen öffenbaren, gasdicht verschließbaren Deckel 16 vorzugsweise an seiner Oberseite aufweist, der während des laufenden Betriebes ebenfalls geschlossen ist, aber beim Einfädeln des Profilanfanges geöffnet ist.

Es sei noch erwähnt, daß im Inneren des Vakuumtankes 4 wenigstens eine in der Zeichnung nicht näher dargestellte Haltescheibe vorgesehen sein kann, die eine mit der Eintrittsöffnung 7 und der Austrittsöffnung genau fluchtende Aussparung entsprechend der Außen - kontur des herzustellenden Profiles haben kann. Dies ist vor allem bei einem längeren Vakuumtank 4 vorteilhaft, weil dann das Profil während seiner noch plastischen Phase innerhalb des Vakuumtanks noch besser gestützt und in seiner gewünschten Form gehalten wird.

In Fig .1 ist angedeutet, daß in dem Vakuumtank 4 wenigstens ein Wasserablauf 17 vorgesehen ist, der oberhalb der obersten Kante des herzustellenden Profiles und der höchsten Stelle der Eintrittsöffnung 7 angeordnet ist, wobei die Saugöffnung 18 zum Anschluß einer Vakuumpumpe oder eines sonstigen Unterdruckerzeugers höher als dieser Wasserablauf 17 liegt. Dadurch wird sichergestellt, daß das durchlaufende Profil ständig allseits von Wasser umschlossen ist und somit so gleichmäßig wie möglich gekühlt wird.

Sowohl die Flüssigkeitsbecken 8 als auch der Vakuumtank 4 können je einen Wasserzulauf haben, der in der Zeichnung aber nicht näher dargestellt ist. Im Vakuumtank kann durch den Wasserzulauf ständig frisches Wasser zugeführt werden, welches dann an dem Überlauf 17 nach der Erwärmung durch das Profil wieder abläuft. Durch die Schnelligkeit des Wasserzulaufes und die zugeführte Wassermenge kann also in gewissem Umfang die Kühltemperatur innerhalb des Vakuumtanks 4 beeinflußt werden. Der Wasserzulauf zu den Flüssigkeitsbecken 8 gleicht jeweils die Wassermenge aus, die an den Eintritts- und Austrittsöffnungen 7 für das Profil in den Vakuumtank 4 gelangt.

Falls als Wasserzulauf im Vakuumtank 4 eine Sprühvorrichtung vorgesehen ist, ist der Wasserablauf zweckmäßigerweise im unteren Bereich der Vakuumkammer 4 unterhalb der untersten Kante des Profiles angeordnet.

Wie bereits erwähnt, sind im Ausführungsbeispiel vor dem Vakuumtank 4 zwei trockene Kalibrierteile 2 und 3 hintereinander geschaltet. Dabei erkennt man, daß als Übergang zwischen den beiden trockenen Kalibrierteilen 2 und 3 ebenfalls ein Flüssigkeitsbecken 8 angeordnet ist, welches somit den Wirkungsgrad der an den trockenen Kalibrierteilen 2 und 3 in bekannter Weise angreifenden Vakuumeinrichtung ebenfalls durch eine bessere Abdichtung in diesem Bereich erhöht.

Es sei noch erwähnt, daß der nicht näher dargestellte Wasserzulauf zum Vakuumbehälter 4 am in Vorschubrichtung hinteren Bereich und der Wasserablauf 17 in dargestellter Weise nahe der Eintrittsöffnung 7 für das Profil angeordnet sind, so daß das kühlere Wasser in dem Bereich zutritt, wo das Profil auch schon stärker abgekühlt ist. Am Eintritt des noch sehr warmen Profiles

/ 14

ist dieses Wasser dann schon etwas angewärmt, so daß ein zu starkes Abschrecken des Profiles innerhalb das Vakuumbehälters 4 vermieden wird. Diese allmählichere Abkühlung des Profiles innerhalb des Vakuumtanks 4 kann dadurch noch verbessert oder ausgestaltet sein, daß der Vakuumtank 4 auf seine Länge in der in Fig. 1 durch eine gestrichelt angedeutete Zwischenwand 19 wenigstens einmal bis über Profilhöhe wasserdicht unterteilt sein kann, wobei dann im in Vorschubrichtung vorderen oder zuerst von dem Profil erreichten Bereich mit wärmerem Wasser als im Vorschubbereich dahinter gekühlt werden kann, wobei jeder abgeteilte Bereich des Vakuumtanks 4 dann zweckmäßigerweise einen eigenen Wasserzulauf und einen eigenen Wasserablauf 17 hat.

Insgesamt erlaubt die Vorrichtung 1 ein schnelles Einfädeln und Schließen der einzelnen für das Kalibrieren wichtigen Teile wie vor allem der trockenen Kalibrierteile und der Übergänge zum Vakuumtank bei dennoch bestmöglicher Abdichtung vor allem des Vakuumtanks, so daß in dessen Inneren mit gutem Wirkungsgrad ein ausreichend hoher Unterdruck aufrecht erhalten bleiben kann, selbst wenn das zu kalibrierende Profil eine komplizierte, mit hakenförmigen Stegen und dergleichen versehene Kontur hat, die entsprechend lange Durchtrittsspalte an der Eintrittsöffnung und der Austrittsöffnung verursachen würde.

Alle in der Beschreibung, den Ansprüchen und der Zeichnung dargestellten Merkmale und Konstruktionsdetails können sowohl einzeln als auch in beliebiger Kombination miteinander wesentliche Bedeutung haben.

Ansprüche

PATENTANWÄLTE
DIPL.-ING. H. SCHMITT
DIPL.-ING. W. MAUCHER

78 FREIBURG i. BR.
DREIKÖNIGSTR. 13
TELEFON: (07 61) 7 07 73
         7 07 74
MR/bö

1 Herr
  Otto Spitzmüller
  Eckener Straße 12
  7600 Offenburg

- 15 -

0248280

UNSERE AKTE · BITTE STETS ANGEBEN!

E 87 295 MR

## Vorrichtung zum Kalibrieren eines

## hohlen Kunststoffprofiles

ANSPRÜCHE

1. Vorrichtung zum Kalibrieren eines aus einer Strangpresse austretenden, zunächst noch plastischen hohlen Kunststoffprofiles, mit wenigstens einem öffenbaren, trockenen Kalibrierteil und einem in Vorschubrichtung des Profiles dahinter angeordneten Vakuumtank od. dgl., innerhalb welchem das Profil unter Unterdruck mit Flüssigkeit, vorzugsweise Wasser oder Gas gekühlt wird, wobei sowohl am Eintritt als auch am Austritt des Vakuumtankes jeweils eine der Profilkontur entsprechende Öffnung für den Durchtritt des Profiles vorgesehen ist, d a - d u r c h   g e k e n n z e i c h n e t , daß zur Abdichtung der Eintrittsöffnung (7) und der Austrittsöffnung für das Profil außen am Vakuumtank (4) jeweils ein Flüssigkeitsbecken (8) vorgesehen ist, dessen Füllungsniveau über den höchsten Stellen der Eintrittsöffnung (7) bzw. der Austrittsöffnung angeordnet ist.

2. Vorrichtung nach Anspruch 1, dadurch gekennzeichnet, daß die Füllung der Flüssigkeitsbecken (8) Wasser ist.

/ 16

3. Vorrichtung nach Anspruch 1 oder 2, dadurch gekennzeichnet, daß das in Vorschubrichtung erste Flüssigkeitsbecken (8) am Vakuumtank (4) an seiner dem trockenen Kalibrierteil (3) zugewandten Wandung (9) einen die Stirnseite (10) dieses Kalibrierteiles (3) aufnehmenden Ausschnitt (11) und eine gegen die Stirnseite (10) des Kalibrierteiles mittels einer Dichtung (12) od. dgl. anlegbare Platte (13) aufweist, die ihrerseits eine vorzugsweise nach oben offene Ausnehmung (14) für den Durchtritt des Profiles hat und von dem trockenen Kalibrierteil (3) wegbewegbar ist.

4. Vorrichtung nach einem der Ansprüche 1 bis 3, dadurch gekennzeichnet, daß die an der Stirnseite (10) des trockenen Kalibrierteiles (3) dicht anlegbare Platte (13) zum Abschließen des Wasserbeckens (8) als schwenkbare, unterhalb der Unterkante des trockenen Kalibrierteiles (3) angelenkte Klappe ausgebildet ist.

5. Vorrichtung nach einem der Ansprüche 1 bis 4, dadurch gekennzeichnet, daß im Inneren des Vakuumtanks (4) wenigstens eine Haltescheibe vorgesehen ist, die eine mit der Eintrittsöffnung (7) und der Austrittsöffnung genau fluchtende Aussparung entsprechend der Außenkontur des herzustellenden Profiles hat.

6. Vorrichtung nach einem der Ansprüche 1 bis 5, dadurch gekennzeichnet, daß der Vakuumtank (4) einen öffenbaren, gasdicht verschließbaren Deckel (16) vorzugsweise an seiner Oberseite aufweist.

7. Vorrichtung nach einem der Ansprüche 1 bis 6, dadurch gekennzeichnet, daß in dem Vakuumtank (4) wenigstens ein Wasserablauf vorgesehen ist, der oberhalb der obersten Kante des herzustellenden Profiles und der höchsten Stellen der Eintritts- und Austrittsöffnung (7) angeordnet ist und daß die Saugöffnung (18) zum Anschluß einer Vakuumpumpe od. dgl. Unterdruck-Erzeuger höher als der Wasserablauf (17) liegt.

8. Vorrichtung nach einem der Ansprüche 1 bis 7, dadurch gekennzeichnet, daß die Flüssigkeitsbecken (8) und der Vakuumtank (4) je einen Wasserzulauf haben.

9. Vorrichtung nach einem der Ansprüche 1 bis 8, dadurch gekennzeichnet, daß als Wasserzulauf im Vakuumtank (4) eine Sprühvorrichtung vorgesehen ist und ein Wasserablauf vorzugsweise im unteren Bereich der Vakuumkammer (4) unterhalb der untersten Kante des Profiles angeordnet ist.

10. Vorrichtung nach einem der Ansprüche 1 bis 9, dadurch gekennzeichnet, daß vor dem Vakuumtank (4) zwei trockene Kalibrierteile (2, 3) hintereinander geschaltet sind und als Übergang zwischen den beiden trockenen Kalibrierteilen (2, 3) ein Flüssigkeitsbecken (8) angeordnet ist.

11. Vorrichtung nach einem der Ansprüche 1 bis 10, dadurch gekennzeichnet, daß der Wasserzulauf zum Vakuumbehälter (4) am in Vorschubrichtung unteren Bereich und der Wasserablauf (17) nahe der Eintrittsöffnung (7) für das Profil angeordnet sind.

12. Vorrichtung nach einem der Ansprüche 1 bis 11, dadurch gekennzeichnet, daß der Vakuumtank (4) auf seine Länge wenigstens einmal bis über Profilhöhe wasserdicht unterteilt ist und im in Vorschubrichtung ersten Bereich mit wärmerem Wasser als in Vorschubrichtung dahinter beschickt ist, wobei jeder abgeteilte Bereich

/ 18

des Vakuumtanks (4) vorzugsweise einen eigenen Wasserzu- und -ablauf (17) hat.

- Zusammenfassung -

Fig. 1

Fig. 2

Schnitt A - B

Fig. 3

8

15a

Dichtung

12

13

13

15

9

3

10

11

Profilhöhe ~H

3/4

0248280

Fig. 4